# FASCICULE DE BREVET EUROPEEN

(11) **EP 2 011 048 B1**
(45) Date de publication et mention de la délivrance du brevet: **06.09.2017**
(21) Numéro de dépôt: 07731335.1
(22) Date de dépôt: 20.04.2007
(51) Int. Cl.: G06F 21/51, G06F 21/00, H04L 29/06

(54) **SYSTEME ET PROCEDE SECURISE DE TRAITEMENT DE DONNEES ENTRE UN PREMIER DISPOSITIF ET AU MOINS UN SECOND DISPOSITIF DISPOSANT DE MOYENS DE SURVEILLANCE**
SICHERES SYSTEM UND VERFAHREN ZUM VERARBEITEN VON DATEN ZWISCHEN EINER ERSTEN EINRICHTUNG UND MINDESTENS EINER ZWEITEN EINRICHTUNG, DIE MIT ÜBERWACHUNGSMITTELN AUSGESTATTET IST
SECURE SYSTEM AND METHOD FOR PROCESSING DATA BETWEEN A FIRST DEVICE AND AT LEAST ONE SECOND DEVICE FURNISHED WITH MONITORING MEANS

(30) Priorité: 21.04.2006 FR 0603582
(43) Date de publication de la demande: 07.01.2009
(73) Titulaire: Trusted Logic Mobility SAS, 92190 Meudon (FR)
(72) Inventeur: FREREBEAU, Laurent, 78000 Versailles (FR); LE METAYER, Daniel, 78150 Le Chesnay (FR)
(74) Mandataire: D Young & Co LLP
(86) Numéro de dépôt international: PCT/FR2007/000672
(87) Numéro de publication internationale: WO 2007/122329

(56) Documents cités:
- EP-A- 1 055 988
- EP-B1- 1 159 662
- US-B1- 6 327 652

## Description

La présente invention concerne un système sécurisé de traitement de données comportant un premier dispositif et au moins un second dispositif, les dispositifs comportant des moyens de commande et de communication et les moyens de commande et de communication du premier dispositif étant sécurisés. Elle concerne également les dispositifs correspondants, un procédé de fonctionnement de système et un programme d'ordinateur associé.

Lorsqu'un système électronique incluant divers périphériques tels qu'un écran, un clavier, un disque, ... a en charge un traitement de sécurité tel qu'une authentification d'utilisateur, une transaction commerciale, une signature électronique, un vote, ou encore le rendu d'un contenu multimédia protégé, et que ce traitement nécessite l'utilisation d'un ou de plusieurs de ces périphériques, le système doit s'assurer de l'état sécuritaire de ces périphériques au moment où ceux-ci sont requis pour ce traitement de sécurité.

La détermination de l'état sécuritaire d'un périphérique est d'autant plus difficile que celui-ci peut être amovible, c'est-à-dire physiquement détachable du coeur du système et qu'il ne partage pas forcément ses ressources (espaces mémoire, registres, caches, etc.) avec ceux qui doivent en contrôler l'intégrité. Typiquement, de nombreux systèmes sont aujourd'hui constitués d'un coeur et de périphériques « rapportés », associés au coeur au moyen, par exemple, de liaisons USB ou de connexions sans fil. Au-delà de l'authentification des périphériques au moment de leur association au système, le coeur du système doit obtenir des garanties sur l'état de sécurité effective de ces composants « rapportés » au moment où ils sont impliqués dans un traitement sensible. Typiquement, le coeur du système peut avoir besoin de s'assurer, le moment voulu, qu'un périphérique donné a été initialisé en suivant une procédure de confiance, que le code de ce périphérique est toujours sûr, que ces données sont toujours saines, et que ce périphérique est dans un mode d'exécution particulier, clairement défini et maîtrisé.

Pour résoudre ce problème, une première solution a été proposée pour le coeur du système en créant un mécanisme de partitionnement logique, et éventuellement physique, assurant que les éléments sensibles de ce coeur sont isolés des éléments non sensibles du système, et qu'ils sont accessibles des éléments non sensibles du système au travers d'un canal de communication sécurisé par le mécanisme de partitionnement. De plus, le mécanisme de partitionnement permet d'exécuter les éléments sensibles dans un mode privilégié leur donnant accès à des facilités et des ressources du système qui ne sont pas accessibles aux éléments non sensibles.

En complément, le coeur et les périphériques peuvent mettre en oeuvre des procédés d'appairage reposant typiquement sur le partage d'une clé secrète, ces procédés permettant l'authentification des deux parties et le scellement, ou le chiffrement, de leurs échanges.

Cependant, ces solutions ne répondent pas au problème de la connaissance par le coeur du système, à un moment donné de son exécution, de l'état de sécurité d'un de ses périphériques alors que le coeur en question n'a pas directement accès aux ressources mémoire et autres éléments internes de ce périphérique qui lui permettraient d'obtenir directement des garanties sur l'état de sécurité effectif du périphérique à surveiller.

Le document US 6327652 décrit une méthode pour vérifier le niveau de confiance d'un système informatique par la détermination d'une identité dudit système basée sur le niveau de confiance de ses composants.

Le document EP 1159662 décrit une méthode pour contrôler l'intégrité d'un premier système informatique grâce à un composant de surveillance qui rapporte à un système de confiance externe des données observées du comportement du premier système informatique ledit système de confiance compare les données observées à des valeurs attendues.

L'invention est définie dans les revendications 1, 17 et 24.

Le but de l'invention est donc de proposer un système capable de fournir à un premier dispositif des garanties sur l'état de sécurité d'un autre (ou de plusieurs autres) dispositif(s), amovible(s) ou non, de façon à permettre à ce premier dispositif de décider si cet autre (ou ces autres) dispositif(s) peut (ou peuvent) exécuter des opérations sensibles.

A cet effet, l'invention a pour objet un système sécurisé de traitement de données comportant un premier dispositif comportant des moyens sécurisés de commande et de communication, et au moins un second dispositif comportant des moyens de commande et de communication avec le premier dispositif, caractérisé en ce que
- les moyens de commande et de communication de chaque second dispositif comportent des moyens de surveillance adaptés pour transmettre au premier dispositif des informations de fonctionnement du second dispositif, les moyens de surveillance de chaque second dispositif comportant du code de confiance injecté dans le code principal desdits seconds dispositifs, et
- les moyens sécurisés de commande et de communication du premier dispositif comportent des moyens de stockage d'un modèle de comportement de chaque second dispositif et des moyens de comparaison des informations de fonctionnement reçues de chaque second dispositif avec le modèle de comportement de ce second dispositif de façon à déterminer si le fonctionnement de ce second dispositif est conforme ou non au modèle de comportement stocké, et des moyens de
validation adaptés pour empêcher le lancement d'une opération sensible sur ce second dispositif ou pour commander un changement d'état du second dispositif si les moyens de comparaison ont déterminé que ce second dispositif ne manifeste pas un fonctionnement conforme.

Selon d'autres caractéristiques de l'invention :
- le code de confiance comprend des portions de code entremêlées au code principal, une ou plusieurs portions étant placées au niveau de un ou plusieurs points critiques du programme principal, afin que, lors de l'exécution du code principal, lorsqu'un point critique est atteint, la portion de code de confiance placée à cet endroit est également exécutée ;
- le code de confiance comprend une partie configurée pour recevoir des données de test de la part du premier dispositif, et pour écrire ces données de test dans un ou plusieurs emplacements mémoires prédéterminés, et une ou plusieurs des portions de code de confiance entremêlées au code principal, sont configurées pour accéder, lors de leur exécution, aux données de test afin de les modifier,
- le code principal est configuré pour ne pas lire ni écrire les emplacements mémoires prédéterminés destinés à recevoir les données de test,
- les données de test transmises par le premier dispositif sont constituées d'un ou plusieurs nombres aléatoires,
- les informations de fonctionnement comprennent notamment les données de test modifiées par les portions entremêlées du code de confiance,
- le code de confiance est regroupé dans des bibliothèques spécifiques appelées par une portion de code de confiance intégrée dans le code principal,
- le code de confiance est neutre par rapport au code principal,
- la vérification que le fonctionnement du second dispositif est conforme au modèle de comportement stocké comporte une vérification de l'intégrité de certaines portions du code dudit second dispositif,
- la vérification que le fonctionnement du second dispositif est conforme au modèle de comportement stocké comporte une vérification de l'intégrité de certaines portions des données dudit second dispositif,
- la vérification que le fonctionnement du second dispositif est conforme au modèle de comportement stocké comporte une vérification de l'authenticité dudit second dispositif,
- la vérification que le fonctionnement du second dispositif est conforme au modèle de comportement stocké comporte une vérification que l'état de sécurité dudit second dispositif est suffisant pour effectuer une opération sensible,
- les moyens de communication des premier et second dispositifs sont adaptés pour sécuriser les échanges d'informations entre eux,
- les moyens de sécurisation des échanges d'informations entre les premier et second dispositifs comportent l'émission d'une valeur aléatoire par le premier dispositif, l'utilisation de cette valeur aléatoire par les moyens de commande du second dispositif avant envoi au premier dispositif d'un résultat dépendant de cette valeur aléatoire et validation dudit résultat par le premier dispositif par comparaison avec un résultat attendu fonction de la valeur aléatoire,
- les moyens de surveillance du second dispositif sont actionnés par une commande émise par les moyens sécurisés de commande et de communication du premier dispositif,
- les moyens de surveillance du second dispositif peuvent transmettre, de leur propre initiative, des informations de fonctionnement aux moyens sécurisés du premier dispositif, et
- les moyens de surveillance du second dispositif sont actionnés, au moins, au moment de l'installation dudit second dispositif ou lors de sa première interaction avec le premier dispositif.

L'invention a également pour objet un procédé sécurisé de traitement de données entre un premier dispositif comportant des moyens sécurisés de commande et de communication, et au moins un second dispositif comportant des moyens de commande et de communication avec le premier dispositif, caractérisé en ce qu'il comporte les étapes de :
- stockage dans le premier dispositif d'un modèle de comportement de chaque second dispositif ;
- transmission de chaque second dispositif au premier dispositif d'informations de fonctionnement du second dispositif, les informations de fonctionnement étant transmises par un code de confiance injecté dans le code principal desdits seconds dispositifs ;
- comparaison par le premier dispositif des informations de fonctionnement reçues avec le modèle de comportement stocké par le second dispositif correspondant ;
- autorisation du lancement d'une opération sensible sur le second dispositif si et seulement si la comparaison a détecté que le fonctionnement du second dispositif est conforme à son modèle de comportement stocké.

Selon d'autres caractéristiques de l'invention :
- le code de confiance comprend des portions de code entremêlées au code principal, une ou plusieurs portions étant placées au niveau de un ou plusieurs points critiques du programme principal, et lors de l'exécution du code principal, lorsqu'un point critique est atteint, la portion de code de confiance placée à cet endroit est également exécutée,
- une partie du code de confiance reçoit des données de test de la part du premier dispositif, et écrit ces données de test dans un ou plusieurs emplacements mémoires prédéterminés, et une ou plusieurs des portions de code de confiance entremêlées au code principal, accèdent, lors de leur exécution, aux données de test afin de les modifier.
- lors de l'exécution du code principal, seul le code de confiance lit et écrit dans les emplacements mémoires prédéterminés destinés à recevoir les données de test
- les données de test transmises par le premier dispositif sont constituées d'un ou plusieurs nombres aléatoires,
- le code de confiance est regroupé dans des bibliothèques spécifiques appelées par une partie de code de confiance intégrée dans le code principal, et
- le code de confiance est neutre par rapport au code principal.

L'invention a également pour objet un programme d'ordinateur comportant des instructions de code de programme pour l'exécution des étapes d'un procédé selon l'invention lorsque ledit programme est exécuté sur un ordinateur.

L'invention sera mieux comprise à la lecture de la description qui va suivre, donnée uniquement à titre d'exemple, et faite en référence aux dessins dans lesquels :
- la figure 1 est une vue schématique d'un système de traitement de données selon un mode de réalisation de l'invention ;
- la figure 2 est un ordinogramme du procédé de fonctionnement du système de la figure 1 ; et
- la figure 3 est un ordinogramme d'un mode de réalisation de sécurisation de données.

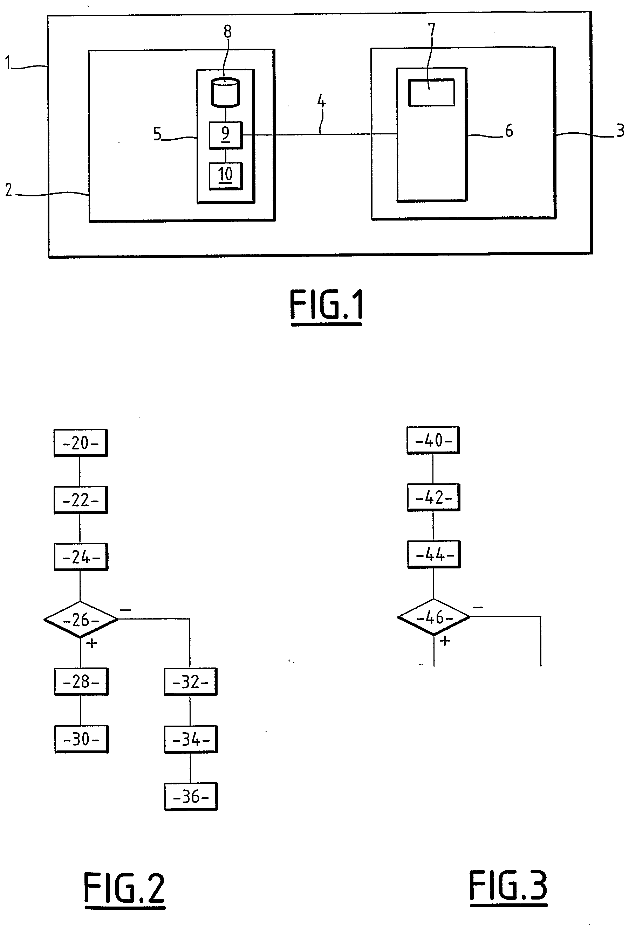

En référence à la figure 1, un système 1 de traitement de données comporte un premier dispositif 2.

Ce premier dispositif 2 est connecté à au moins un second dispositif 3.

Typiquement, le premier dispositif peut être une carte-mère d'un ordinateur personnel, l'unité centrale d'un terminal de télécommunication, un processeur applicatif de téléphone portatif et le second dispositif 3 est un périphérique (ou un processeur spécialisé) relié à cette carte-mère ou cette unité centrale par une liaison de données 4.

Pour des raisons de clarté, un seul périphérique est représenté, mais il est bien connu qu'un système de traitement de données comporte une pluralité de périphériques ayant des fonctions diverses allant de la gestion de l'interface homme-machine au stockage de données en passant par la mise en réseau du système ou le traitement d'opérations spécifiques (codage, communications, etc.).

La liaison de données 4 peut être de type interface interne telles que, par exemple, les normes PCI ou AGP ou de type interface externe telles que, par exemple, les normes USB ou Bluetooth.

Le premier dispositif 2 comporte des moyens 5 sécurisés de commande et de communication, par exemple sous la forme d'un module de sécurité ou sous la forme d'un mode de fonctionnement spécifique de l'unité centrale permettant de garantir un mode privilégié de fonctionnement en sécurité.

Le second dispositif 3 comporte des moyens 6 de commande et de communication, composés d'éléments matériels et logiciels. Cependant, ceux-ci ne sont pas obligatoirement sécurisés.

En effet, la plupart des périphériques sont développés avec l'objectif de remplir une fonctionnalité particulière sans exigence de sécurité spécifique sur leur fonctionnement.

Aussi, dans une étape préalable à leur mise à disposition pour des applications de sécurité, leurs moyens 6 de commande et de communication sont adaptés pour qu'ils comportent des moyens 7 de surveillance.

Ces moyens 7 de surveillance sont formés, par exemple, d'un code de confiance injecté au moins en partie dans le code principal de pilotage du second dispositif. Ce code de confiance est neutre par rapport au code principal et ne crée pas d'effet de bord sur le comportement fonctionnel du second dispositif.

Le code de confiance comporte deux parties. Une première partie, dite partie d'interface, sert à la communication avec les moyens sécurisés 5 du premier dispositif.

Cette partie d'interface est notamment configurée pour recevoir des commandes de demande d'informations et pour y répondre.

Ainsi, la partie d'interface est configurée pour lire le contenu de certaines zones mémoires ou le compte-rendu d'une opération particulière, en particulier de la bonne exécution de l'initialisation du second dispositif, et pour répondre au premier dispositif 2 en fournissant ces informations.

La partie d'interface est également configurée pour lire et écrire dans un ou plusieurs emplacements mémoires prédéterminés des données de test reçues depuis les moyens sécurisés 5, afin que la seconde partie du code de confiance puisse y accéder comme cela va être décrit. De préférence, ces emplacements mémoires sont spécifiques au code de confiance, c'est-à-dire que le code principal est configuré pour ne pas lire ni écrire ces emplacements mémoires.

La partie d'interface peut se trouver entièrement ou bien en partie à l'extérieur du code principal : elle n'a pas besoin d'être entremêlée au code principal comme la seconde partie qui va être décrite à présent.

La seconde partie du code de confiance, dite partie coeur, sert à tester le bon déroulement du code principal, et de ce fait son intégrité.

La seconde partie est découpée en une ou plusieurs portions placées au niveau de un ou plusieurs points critiques. Ainsi, lors de l'exécution du code principal, lorsqu'un point critique est atteint, la portion de code de confiance placée à cet endroit est également exécutée.

L'injection de la seconde partie du code de confiance dans le code principal est effectuée manuellement, ou de manière automatique ou semi-automatique après analyse du code principal. Cette analyse est effectuée, par exemple, à l'aide d'outils d'analyse statique de programme. Les techniques d'analyse statique sont nombreuses et bien connues : interprétation abstraite, analyses de flot de contrôle, analyses de flots de données, vérification de modèle (« model checking »), preuves formelles, etc.

L'analyse statique d'un programme permet notamment de déterminer son flot de contrôle - c'est-à-dire une représentation des chemins d'exécutions possibles du programme - et ses flots de données, c'est-à-dire les valeurs de variables, registres, mémoires, expressions et états du programme en divers points d'un chemin d'exécution.

Les outils d'analyse permettent donc d'identifier les points critiques du code principal. A titre d'exemples non limitatifs, ces points critiques sont des points précédant une modification ou un accès à une donnée sensible, ou l'envoi de données sensibles sur un port du second dispositif.

La partie coeur du code de confiance est entièrement entremêlée au code principal et/ou regroupée dans des bibliothèques spécifiques appelées par la portion de code de confiance intégrée dans le code principal.

Une ou plusieurs, à la limite toutes, des portions de la partie coeur accèdent, lors de leur exécution, aux données de test afin de les modifier.

La valeur des données de test dépend donc de l'ordre dans lequel les portions les ont modifiées et donc de l'ordre dans lequel le code principal a été exécuté.

Ainsi, les données de test donnent une indication sur l'intégrité du second dispositif 3.

On remarquera que la valeur des données de test dépend de l'état dans lequel se trouve le code principal, c'est-à-dire de l'endroit où il se trouve dans le cheminement de son exécution.

Ainsi, les données de test donnent également une indication sur l'état du second périphérique 3.

Les moyens 5 sécurisés du premier dispositif 2 comportent des moyens de stockage 8 d'un modèle comportemental du second dispositif 3. Le modèle comportemental tient compte non seulement du code principal, mais également du code de confiance injecté.

Ils comportent aussi des moyens 9 de comparaison d'une valeur attendue d'après le modèle comportemental, avec la valeur des données de test reçues dans les informations de fonctionnement transmises par la partie d'interface du code de confiance.

La comparaison permet de déterminer si le fonctionnement du second dispositif 3 est conforme au modèle comportemental et si le second dispositif se trouve dans un état de sécurité suffisant pour effectuer certaines opérations sensibles.

Les moyens sécurisés 5 comportent également des moyens 10 de validation qui n'autorisent l'exécution d'une opération sensible impliquant le second dispositif 3 qui si la comparaison a déterminé que le second dispositif 3 a un fonctionnement conforme et qu'il se trouve dans un état de sécurité suffisant. Ces moyens 10 de validation peuvent également commander un changement d'état du second dispositif si la comparaison a déterminé que celui-ci ne se trouve pas dans un état de sécurité suffisant

Ainsi, typiquement, le fonctionnement du système 1 est, figure 2, un procédé selon les étapes suivantes.

Lors du fonctionnement du premier dispositif 2, les moyens sécurisés 5 de commande et de surveillance déterminent en 20 qu'une opération sensible doit être exécutée par le second dispositif 3.

Ils émettent en 22 une ou des commandes de demande d'informations à destination des moyens 7 de surveillance et plus précisément à destination de la partie d'interface du code de confiance.

Cette commande comprend une donnée de test que la partie d'interface enregistre dans les emplacements mémoire du second dispositif prévus à cet effet.

Au bout d'un certain temps, les moyens 7 de surveillance renvoient en réponse, étape 24, les informations de fonctionnement demandées.

Ces informations de fonctionnement comprennent les données de test modifiées par la seconde partie et des informations supplémentaires. Ces informations supplémentaires sont récoltées par la partie d'interface et comprennent par exemple le contenu de certaines zones mémoires auxquelles le code principal accède.

Ces informations, et notamment la valeur des données de test modifiées sont comparées en 26 aux informations du modèle comportemental stocké en 8 par le premier dispositif 2.

Si les informations sont conformes à ce qui est attendu au vu du modèle comportemental et que le second dispositif est jugé dans un état de sécurité suffisant, alors l'état du second dispositif 3 est validé en 28 et l'opération sensible est exécutée en 30 par le second dispositif.

Par contre, si les informations ne sont pas conformes, le second dispositif 3 est considéré en 32 comme étant dans un état de sécurité insuffisant ou douteux et l'opération sensible est bloquée en 34 ; un message d'alerte peut également être transmis en 36 à l'utilisateur ou une commande de changement d'état envoyée au second dispositif.

L'efficacité du système est basée sur la qualité des informations de fonctionnement transmises au premier dispositif 2.

Aussi, pour éviter tout risque d'interception et/ou de modification de ces données, celles-ci peuvent être sécurisées, c'est à dire protégées - typiquement authentifiées ou chiffrées.

Cela peut se faire ponctuellement, pour chaque donnée ou bien les moyens de communication des premier et second dispositifs sécurisent la transmission des informations en créant, par exemple, un tunnel chiffré.

Une autre variante de sécurisation consiste à utiliser la technique bien connue de l'homme du métier dite de « challenge/réponse ».

Dans ce cas, les données de test transmises par le premier dispositif 2 sont constituées d'un nombre aléatoire, ou plusieurs.

Le second dispositif 3 utilise en 42 ce nombre aléatoire dans ses calculs et envoie le résultat au premier dispositif 2.

Le premier dispositif étudie en 44 le résultat reçu. Dans ce résultat, il doit retrouver en 46 une information particulière correspondant à un calcul déterminé fait avec le nombre aléatoire. Si cette information est présente, cela implique que c'est bien le second dispositif qui a traité et envoyé les informations.

Cette technique permet avantageusement d'éviter les stratagèmes de « re-jeu » que pourrait utiliser un tiers qui surveille la liaison de données 4 et qui pourrait donc tenter de se faire passer pour le second dispositif après avoir récupéré les informations provenant d'échanges antérieurs.

Il est également souhaitable de s'assurer que les moyens de surveillance n'ont pas été modifiés ou court-circuités. Aussi, parmi les informations de fonctionnement demandées, une signature des moyens de surveillance peut être requise.

Cette signature consiste, par exemple, à utiliser la valeur aléatoire reçue du premier dispositif tout au long de l'exécution du code de confiance, en lui appliquant divers traitements connus du premier dispositif et recalculables par celui-ci, ces informations pouvant inclure, bien sûr, des informations sur l'état du second dispositif.

Cela permet avantageusement de compliquer la reconstruction d'une réponse valide du code de confiance par un acteur malveillant qui en aurait repéré l'existence et qui aurait compris le fonctionnement de la construction d'une réponse du code de confiance au premier dispositif.

Comme indiqué ci-dessus, le fonctionnement type du système consiste pour les moyens sécurisés 5 du premier dispositif à envoyer une commande à laquelle les moyens 7 de surveillance du second dispositif 3 répondent.

Cependant, il est également possible que ce soit les moyens 7 de surveillance qui prennent l'initiative d'envoyer des informations aux moyens sécurisés 5, voire des messages qui attendent une réponse du premier dispositif, cette réponse pouvant être ensuite utilisée par le second dispositif pour gérer son état de sécurité ou restreindre l'accès à certaines de ses ressources.

Ce mode de fonctionnement est particulièrement pertinent quand le second dispositif comporte un module de sécurité qui fait alors office de moyen de surveillance ou, de façon générale, quand les moyens de surveillance peuvent être sécurisés.

Le système décrit est particulièrement adapté à tout système de traitement de données qui doit échanger des informations confidentielles avec divers périphériques amovibles ou non.

Typiquement, les téléphones cellulaires, les lecteurs audio, vidéo ou multimédia, les terminaux de paiement bancaire ou portatif, les assistants numériques personnels et les passerelles de routage domestiques sont de tels systèmes.

Le procédé sécurisé de traitement de données ainsi décrit est donc exécuté par un dispositif informatique sous la commande d'instructions logicielles d'un programme d'ordinateur. Le programme peut être stocké dans ou transmis par un support de données. Celui-ci peut être un matériel de stockage tel qu'un CD-ROM, une disquette magnétique ou un disque dur, ou bien, un support transmissible tel qu'un signal électrique, optique ou radio.

## Revendications

1. Système (1) sécurisé de traitement de données comportant un premier dispositif (2) comportant des moyens sécurisés (5) de commande et de communication, et au moins un second dispositif (3) comportant des moyens (6) de commande et de communication avec le premier dispositif, **caractérisé en ce que** - les moyens (6) de commande et de communication dudit second dispositif (3) comportent des moyens (7) de surveillance adaptés pour transmettre au premier dispositif (2) une valeur de données de test modifiée lors de l'exécution d'une ou de plusieurs portions d'un code de confiance des moyens de surveillance dudit second dispositif entremêlées dans un code principal de pilotage du second dispositif, lors de l'exécution dudit code principal de pilotage du second dispositif,
- les moyens sécurisés (5) de commande et de communication du premier dispositif (2) comportent :
- des moyens (8) de stockage d'un modèle de comportement dudit second dispositif (3), et
- des moyens (9) de comparaison d'une valeur attendue d'après le modèle comportemental dudit second dispositif avec la valeur de données de test modifiée de façon à déterminer si le fonctionnement de ce second dispositif (3) est conforme ou non au modèle de comportement stocké, et
- des moyens (10) de validation adaptés pour empêcher le lancement d'une opération sensible sur ce second dispositif ou pour commander un changement d'état du second dispositif si les moyens de comparaison ont déterminé que ce second dispositif ne manifeste pas un fonctionnement conforme.

2. Système sécurisé selon la revendication 1, dans lequel une ou plusieurs portions du code de confiance entremêlées au code principal sont placées au niveau de un ou plusieurs points critiques du code principal, afin que, lors de l'exécution dudit code principal, lorsqu'un point critique est atteint, la portion de code de confiance placée à cet endroit est également exécutée.

3. Système sécurisé selon l'une des revendications précédentes, dans lequel :
- le code de confiance comprend une partie configurée pour recevoir des données de test de la part du premier dispositif, et pour écrire ces données de test dans un ou plusieurs emplacements mémoires prédéterminés, et
- une ou plusieurs des portions de code de confiance entremêlées au code principal, sont configurées pour accéder, lors de leur exécution, aux données de test afin de les modifier.

4. Système sécurisé selon la revendication 3, dans lequel le code principal est configuré pour ne pas lire ni écrire les emplacements mémoires prédéterminés destinés à recevoir les données de test.

5. Système sécurisé selon les revendications 3 ou 4, dans lequel les données de test transmises par le premier dispositif sont constituées d'un ou plusieurs nombres aléatoires.

6. Système sécurisé selon l'une quelconque des revendications précédentes, dans lequel le code de confiance est regroupé dans des bibliothèques spécifiques appelées par une portion de code de confiance intégrée dans le code principal.

7. Système sécurisé selon l'une quelconque des revendications précédentes, dans lequel le code de confiance est neutre par rapport au code principal.

8. Système sécurisé l'une quelconque des revendications précédentes, dans lequel la vérification que le fonctionnement du second dispositif (3) est conforme au modèle de comportement stocké comporte une vérification de l'intégrité de certaines portions du code dudit second dispositif.

9. Système sécurisé selon l'une quelconque des revendications précédentes, dans lequel la vérification que le fonctionnement du second dispositif (3) est conforme au modèle de comportement stocké comporte une vérification de l'intégrité de certaines portions des données dudit second dispositif.

10. Système sécurisé selon l'une quelconque des revendications précédentes, dans lequel la vérification que le fonctionnement du second dispositif (3) est conforme au modèle de comportement stocké comporte une vérification de l'authenticité dudit second dispositif.

11. Système sécurisé selon l'une quelconque des revendications précédentes, dans lequel la vérification que le fonctionnement du second dispositif (3) est conforme au modèle de comportement stocké comporte une vérification que l'état de sécurité dudit second dispositif est suffisant pour effectuer une opération sensible.

12. Système sécurisé selon l'une quelconque des revendications précédentes, dans lequel les moyens de communication des premier et second dispositifs sont adaptés pour sécuriser les échanges d'informations entre eux.

13. Système sécurisé selon la revendication 12, dans lequel les moyens de sécurisation des échanges d'informations entre les premier et second dispositifs comportent l'émission d'une valeur aléatoire par le premier dispositif, l'utilisation de cette valeur aléatoire par les moyens de commande du second dispositif avant envoi au premier dispositif d'un résultat dépendant de cette valeur aléatoire et validation dudit résultat par le premier dispositif par comparaison avec un résultat attendu fonction de la valeur aléatoire.

14. Système sécurisé selon l'une quelconque des revendications précédentes, dans lequel les moyens de surveillance du second dispositif sont actionnés par une commande émise par les moyens sécurisés de commande et de communication du premier dispositif.

15. Système sécurisé selon l'une quelconque des revendications précédentes, dans lequel les moyens de surveillance du second dispositif peuvent transmettre, de leur propre initiative, des informations de fonctionnement aux moyens sécurisés du premier dispositif.

16. Système sécurisé selon l'une quelconque des revendications précédentes, dans lequel les moyens de surveillance du second dispositif sont actionnés, au moins, au moment de l'installation dudit second dispositif ou lors de sa première interaction avec le premier dispositif.

17. Procédé sécurisé de traitement de données entre un premier dispositif comportant des moyens sécurisés (5) de commande et de communication, et au moins un second dispositif (3) comportant des moyens (6) de commande et de communication avec le premier dispositif, **caractérisé en ce qu'**il comporte les étapes de :
- stockage dans le premier dispositif d'un modèle de comportement dudit second dispositif ;
- transmission dudit second dispositif au premier dispositif d'une valeur de données de test modifiée lors de l'exécution d'une ou de plusieurs portions d'un code de confiance des moyens de surveillance dudit second dispositif entremêlées dans un code principal de pilotage du second dispositif, lors de l'exécution dudit code principal de pilotage du second dispositif,
- comparaison par le premier dispositif d'une valeur attendue d'après le modèle de comportement dudit second dispositif avec la valeur de données de test modifiée,
- autorisation du lancement d'une opération sensible sur le second dispositif si et seulement si la comparaison a détecté que le fonctionnement du second dispositif est conforme à son modèle de comportement stocké.

18. Procédé sécurisé selon la revendication 17, dans lequel :
- le code de confiance comprend des portions de code entremêlées au code principal, une ou plusieurs portions étant placées au niveau de un ou plusieurs points critiques du programme principal, et
- lors de l'exécution du code principal, lorsqu'un point critique est atteint, la portion de code de confiance placée à cet endroit est également exécutée.

19. Procédé sécurisé selon la revendication 18, dans lequel :
- une partie du code de confiance reçoit des données de test de la part du premier dispositif, et écrit ces données de test dans un ou plusieurs emplacements mémoires prédéterminés, et
- une ou plusieurs des portions de code de confiance entremêlées au code principal, accèdent, lors de leur exécution, aux données de test afin de les modifier.

20. Procédé sécurisé selon la revendication 19, dans lequel lors de l'exécution du code principal, seul le code de confiance lit et écrit dans les emplacements mémoires prédéterminés destinés à recevoir les données de test.

21. Procédé sécurisé selon l'une des revendications 19 ou 20, dans lequel les données de test transmises par le premier dispositif sont constituées d'un ou plusieurs nombres aléatoires.

22. Procédé sécurisé selon l'une quelconque des revendications 17 à 21, dans lequel le code de confiance est regroupé dans des bibliothèques spécifiques appelées par une partie de code de confiance intégrée dans le code principal.

23. Procédé sécurisé selon l'une quelconque des revendications 17 à 22, dans lequel le code de confiance est neutre par rapport au code principal.

24. Programme d'ordinateur comportant des instructions de code de programme pour l'exécution des étapes du procédé selon l'une quelconque des revendications 17 à 23 lorsque ledit programme est exécuté sur un ordinateur.

## Patentansprüche

1. Gesichertes Datenverarbeitungssystem (1), das eine erste Vorrichtung (2), die gesicherte Steuer- und Kommunikationsmittel (5) enthält, und wenigstens eine zweite Vorrichtung (3), die Mittel (6) für die Steuerung und für die Kommunikation mit der ersten Vorrichtung enthält, umfasst, **dadurch gekennzeichnet, dass**
- die Steuer- und Kommunikationsmittel (6) der zweiten Vorrichtung (3) Überwachungsmittel (7) enthalten, die dafür ausgelegt sind, an die erste Vorrichtung (2) einen Testdatenwert zu senden, der bei der Ausführung eines oder mehrerer Abschnitte eines Vertraulichkeitscodes der Überwachungsmittel der zweiten Vorrichtung, die mit einem Hauptsteuercode der zweiten Vorrichtung bei der Ausführung des Hauptsteuercodes der zweiten Vorrichtung verschachtelt werden, modifiziert wird,
- die gesicherten Steuer- und Kommunikationsmittel (5) der ersten Vorrichtung (2) Folgendes umfassen:
- Mittel (8) zum Speichern eines Verhaltensmodells der zweiten Vorrichtung (3) und
- Mittel (9) zum Vergleichen eines gemäß dem Verhaltensmodell der zweiten Vorrichtung erwarteten Wertes mit dem modifizierten Testdatenwert, derart, dass bestimmt wird, ob die Funktionsweise dieser zweiten Vorrichtung (3) mit dem gespeicherten Verhaltensmodell übereinstimmt oder nicht, und
- Validierungsmittel (10), die dafür ausgelegt sind, den Beginn einer sensiblen Operation auf dieser zweiten Vorrichtung zu verhindern oder einen Zustandswechsel der zweiten Vorrichtung zu steuern, falls die Vergleichsmittel bestimmt haben, dass diese zweite Vorrichtung keinen übereinstimmenden Betrieb zeigt.

2. Gesichertes System nach Anspruch 1, wobei ein oder mehrere Abschnitte des Vertraulichkeitscodes, die mit dem Hauptcode verschachtelt sind, auf Höhe eines oder mehrerer kritischer Punkte des Hauptcodes angeordnet sind, damit bei der Ausführung des Hauptcodes dann, wenn ein kritischer Punkt erreicht wird, der Abschnitt des Vertraulichkeitscodes, der an dieser Stelle angeordnet ist, ebenfalls ausgeführt wird.

3. Gesichertes System nach einem der vorhergehenden Ansprüche, wobei:
- der Vertraulichkeitscode einen Teil aufweist, der konfiguriert ist, Testdaten von Seiten der ersten Vorrichtung zu empfangen und diese Testdaten in einen oder mehrere vorgegebene Speicherorte zu schreiben, und
- ein oder mehrere Abschnitte des Vertraulichkeitscodes, die mit dem Hauptcode verschachtelt sind, konfiguriert sind, bei ihrer Ausführung auf Testdaten zuzugreifen, um sie zu modifizieren.

4. Gesichertes System nach Anspruch 3, wobei der Hauptcode konfiguriert ist, die vorgegebenen Speicherorte, die dazu bestimmt sind, die Testdaten zu empfangen, weder zu lesen noch zu beschreiben.

5. Gesichertes System nach den Ansprüchen 3 oder 4, wobei die von der ersten Vorrichtung gesendeten Testdaten aus einer oder mehreren Zufallszahlen gebildet sind.

6. Gesichertes System nach einem der vorhergehenden Ansprüche, wobei der Vertraulichkeitscode in spezifischen Bibliotheken, die durch einen Vertraulichkeitscodeabschnitt, der in den Hauptcode integriert ist, aufgerufen werden, umgruppiert wird.

7. Gesichertes System nach einem der vorhergehenden Ansprüche, wobei der Vertraulichkeitscode in Bezug auf den Hauptcode neutral ist.

8. Gesichertes System nach einem der vorhergehenden Ansprüche, wobei die Verifikation, dass der Betrieb der zweiten Vorrichtung (3) mit dem gespeicherten Verhaltensmodell in Übereinstimmung ist, eine Verifikation der Integrität bestimmter Abschnitte des Codes der zweiten Vorrichtung umfasst.

9. Gesichertes System nach einem der vorhergehenden Ansprüche, wobei die Verifikation, dass der Betrieb der zweiten Vorrichtung (3) mit dem gespeicherten Verhaltensmodell in Übereinstimmung ist, eine Verifikation der Integrität bestimmter Abschnitte der Daten der zweiten Vorrichtung umfasst.

10. Gesichertes System nach einem der vorhergehenden Ansprüche, wobei die Verifikation, dass der Betrieb der zweiten Vorrichtung (3) mit dem gespeicherten Verhaltensmodell in Übereinstimmung ist, eine Verifikation der Echtheit der zweiten Vorrichtung umfasst.

11. Gesichertes System nach einem der vorhergehenden Ansprüche, wobei die Verifikation, dass der Betrieb der zweiten Vorrichtung (3) mit dem gespeicherten Verhaltensmodell in Übereinstimmung ist, eine Verifikation, dass der Sicherheitszustand der zweiten Vorrichtung ausreicht, um eine sensible Operation auszuführen, umfasst.

12. Gesichertes System nach einem der vorhergehenden Ansprüche, wobei die Kommunikationsmittel der ersten und der zweiten Vorrichtung dafür ausgelegt sind, den gegenseitigen Austausch von Informationen zu sichern.

13. Gesichertes System nach Anspruch 12, wobei die Mittel zum Sichern des Informationsaustausches zwischen der ersten und der zweiten Vorrichtung das Aussenden eines Zufallswerts durch die erste Vorrichtung, das Verwenden dieses Zufallswerts durch Steuermittel der zweiten Vorrichtung, bevor diese an die erste Vorrichtung ein Ergebnis schickt, das von diesem Zufallswert abhängt, und das Validieren des Ergebnisses durch die erste Vorrichtung durch Vergleichen mit dem erwarteten Ergebnis, das von dem Zufallswert abhängt, umfasst.

14. Gesichertes System nach einem der vorhergehenden Ansprüche, wobei die Überwachungsmittel der zweiten Vorrichtung durch einen Befehl betätigt werden, der von den gesicherten Steuer- und Kommunikationsmitteln der ersten Vorrichtung ausgesendet wird.

15. Gesichertes System nach einem der vorhergehenden Ansprüche, wobei die Überwachungsmittel der zweiten Vorrichtung auf ihre eigene Initiative hin Informationen über den Betrieb der gesicherten Mittel der ersten Vorrichtung senden können.

16. Gesichertes System nach einem der vorhergehenden Ansprüche, wobei die Überwachungsmittel der zweiten Vorrichtung wenigstens zum Zeitpunkt der Installation der zweiten Vorrichtung oder bei ihrer ersten Wechselwirkung mit der ersten Vorrichtung betätigt werden.

17. Gesichertes Datenverarbeitungsverfahren zwischen einer ersten Vorrichtung, die gesicherte Steuer- und Kommunikationsmittel (5) enthält, und wenigstens einer zweiten Vorrichtung (3), die Mittel (6) für die Steuerung und für die Kommunikation mit der ersten Vorrichtung enthält, **dadurch gekennzeichnet, dass** es die folgenden Schritte umfasst:
- Speichern in der ersten Vorrichtung eines Verhaltensmodells der zweiten Vorrichtung;
- Senden von der zweiten Vorrichtung zu der ersten Vorrichtung eines Testdatenwerts, der bei der Ausführung eines oder mehrerer Abschnitte eines Vertraulichkeitscodes der Überwachungsmittel der zweiten Vorrichtung, die mit einem Hauptsteuercode der zweiten Vorrichtung bei der Ausführung des Hauptsteuercodes der zweiten Vorrichtung verschachtelt werden, modifiziert wird,
- Vergleichen durch die erste Vorrichtung eines gemäß dem Verhaltensmodell der zweiten Vorrichtung erwarteten Wertes mit dem modifizierten Testdatenwert,
- Zulassen des Beginns einer sensiblen Operation in der zweiten Vorrichtung dann und nur dann, wenn der Vergleich detektiert hat, dass der Betrieb der zweiten Vorrichtung mit ihrem gespeicherten Verhaltensmodell in Übereinstimmung ist.

18. Gesichertes Verfahren nach Anspruch 17, wobei:
- der Vertraulichkeitscode Codeabschnitte enthält, die mit dem Hauptcode verschachtelt sind, wobei ein oder mehrere Abschnitte auf Höhe eines oder mehrerer kritischer Punkte des Hauptprogramms angeordnet sind, und
- bei der Ausführung des Hauptcodes dann, wenn ein kritischer Punkt erreicht wird, der Vertraulichkeitscodeabschnitt, der an dieser Stelle angeordnet ist, ebenfalls ausgeführt wird.

19. Gesichertes Verfahren nach Anspruch 18, wobei:
- ein Teil des Vertraulichkeitscodes Testdaten von Seiten der ersten Vorrichtung empfängt und diese Testdaten an eine oder mehrere vorgegebene Speicherorte schreibt und
- ein oder mehrere Vertraulichkeitscodeabschnitte, die mit dem Hauptcode verschachtelt sind, bei ihrer Ausführung auf Testdaten zugreifen, um sie zu modifizieren.

20. Gesichertes Verfahren nach Anspruch 19, wobei bei der Ausführung des Hauptcodes nur der Vertraulichkeitscode die vorgegebenen Speicherorte, die dazu bestimmt sind, die Testdaten zu empfangen, liest und beschreibt.

21. Gesichertes Verfahren nach einem der Ansprüche 19 oder 20, wobei die von der ersten Vorrichtung gesendeten Testdaten aus einer oder mehreren Zufallszahlen gebildet sind.

22. Gesichertes Verfahren nach einem der Ansprüche 17 bis 21, wobei der Vertraulichkeitscode in spezifischen Bibliotheken, die durch einen Teil des Vertraulichkeitscodes, der in den Hauptcode integriert ist, aufgerufen werden, umgruppiert wird.

23. Gesichertes Verfahren nach einem der Ansprüche 17 bis 22, wobei der Vertraulichkeitscode in Bezug auf den Hauptcode neutral ist.

24. Computerprogramm, das Programmcodebefehle für die Ausführung der Schritte des Verfahrens nach einem der Ansprüche 17 bis 23, wenn das Programm auf einem Computer ausgeführt wird, enthält.

## Claims

1. Secure data processing system (1) comprising a first device (2) comprising secure control and communication means (5), and at least one second device (3) comprising control and communication means (6) with the first device, **characterized in that** - the control and communication means (6) of said second device (3) comprise monitoring means (7) suitable for transmitting to the first device (2) a test data value modified upon the execution of one or more portions of a trust code of the monitoring means of said second device intermingled in a main driving code of the second device, upon the execution of said main driving code of the second device,
- the secure control and communication means (5) of the first device (2) comprise:
- means (8) for storing a behaviour model of said second device (3), and
- means (9) for comparing a value expected according to the behavioural model of said second device with the modified test data value so as to determine if the operation of this second device (3) conforms or not to the stored behaviour model, and
- validation means (10) suitable for preventing the launching of a sensitive operation on this second device or for ordering a change of state of the second device if the comparison means have determined that this second device is not manifesting conformal operation.

2. Secure system according to Claim 1, in which, one or more portions of the trust code intermingled with the main code are placed at one or more critical points of the main code, so that, upon the execution of said main code, when a critical point is reached, the portion of trust code placed at this point is also executed.

3. Secure system according to one of the preceding claims, in which:
- the trust code comprises a part configured to receive test data from the first device, and to write these test data in one or more predetermined memory locations, and
- one or more of the portions of trust code intermingled with the main code are configured to access, upon their execution, the test data in order to modify them.

4. Secure system according to Claim 3, in which the main code is configured to neither read nor write the predetermined memory locations intended to receive the test data.

5. Secure system according to Claims 3 or 4, in which the test data transmitted by the first device consist of one or more random numbers.

6. Secure system according to any one of the preceding claims, in which the trust code is grouped together in specific libraries called by a portion of trust code incorporated in the main code.

7. Secure system according to any one of the preceding claims, in which the trust code is neutral relative to the main code.

8. Secure system according to any one of the preceding claims, in which the verification that the operation of the second device (3) conforms to the stored behaviour model comprises a verification of the integrity of certain portions of the code of said second device.

9. Secure system according to any one of the preceding claims, in which the verification that the operation of the second device (3) conforms to the stored behaviour model comprises a verification of the integrity of certain portions of the data of said second device.

10. Secure system according to any one of the preceding claims, in which the verification that the operation of the second device (3) conforms to the stored behaviour model comprises a verification of the authenticity of said second device.

11. Secure system according to any one of the preceding claims, in which the verification that the operation of the second device (3) conforms to the stored behaviour model comprises a verification that the security state of said second device is sufficient to perform a sensitive operation.

12. Secure system according to any one of the preceding claims, in which the communication means of the first and second devices are suitable for securing the exchanges of information between them.

13. Secure system according to Claim 12, in which the means for securing exchanges of information between the first and second devices comprise transmission of a random value by the first device, the use of this random value by the control means of the second device before sending to the first device a result dependent on this random value and validation of said result by the first device by comparison with an expected result that is a function of the random value.

14. Secure system according to any one of the preceding claims, in which the monitoring means of the second device are actuated by a command transmitted by the secure control and communication means of the first device.

15. Secure system according to any one of the preceding claims, in which the monitoring means of the second device can transmit, on their own initiative, operating information to the secure means of the first device.

16. Secure system according to any one of the preceding claims, in which the monitoring means of the second device are actuated, at least, at the moment of the installation of said second device or upon its first interaction with the first device.

17. Secure data processing procedure between a first device comprising secure control and communication means (5), and at least one second device (3) comprising control and communication means (6) with the first device, **characterized in that** it comprises the steps of:
- storage in the first device of a behaviour model of said second device;
- transmission from said second device to the first device of a test data value modified upon the execution of one or more portions of a trust code of the monitoring means of said second device intermingled in a main driving code of the second device, upon the execution of said main driving code of the second device,
- comparison by the first device of a value expected according to the behaviour model of said second device with the modified test data value,
- authorisation to launch a sensitive operation on the second device if, and only if, the comparison has detected that the operation of the second device conforms to its stored behaviour model.

18. Secure procedure according to Claim 17, in which:
- the trust code comprises code portions intermingled with the main code, one or more portions being placed at one or more critical points of the main program, and
- upon the execution of the main code, when a critical point is reached, the portion of trust code placed at this point is also executed.

19. Secure procedure according to Claim 18, in which:
- a part of the trust code receives test data from the first device, and writes these test data in one or more predetermined memory locations, and
- one or more of the portions of trust code intermingled with the main code access, upon their execution, the test data in order to modify them.

20. Secure procedure according to Claim 19, in which, upon the execution of the main code, only the trust code reads and writes in the predetermined memory locations intended to receive the test data.

21. Secure procedure according to one of Claims 19 or 20, in which the test data transmitted by the first device consist of one or more random numbers.

22. Secure procedure according to any one of Claims 17 to 21, in which the trust code is grouped together in specific libraries called by a part of trust code incorporated in the main code.

23. Secure procedure according to any one of Claims 17 to 22, in which the trust code is neutral relative to the main code.

24. Computer program comprising program code instructions for the execution of the steps of the procedure according to any one of Claims 17 to 23 when said program is run on a computer.
